(19) Europäisches Patentamt
European Patent Office
Office européen des brevets

(11) **EP 3 965 050 A1**

(12) **EUROPEAN PATENT APPLICATION**

(43) Date of publication:
**09.03.2022 Bulletin 2022/10**

(51) International Patent Classification (IPC):
***G06Q 50/16*** (2012.01)     ***G06Q 30/02*** (2012.01)
***G06Q 30/06*** (2012.01)

(21) Application number: **21171004.1**

(22) Date of filing: **28.04.2021**

(52) Cooperative Patent Classification (CPC):
**G06Q 50/16; G06Q 30/0278; G06Q 30/0282;
G06Q 30/0631**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2020 US 202016944982**

(71) Applicant: **CBRE, Inc.
Los Angeles CA 90071 (US)**

(72) Inventors:
• **DHANDAPANI, Chandra
Los Angeles, CA California 90071 (US)**
• **CHINOY, Sohin
Los Angeles, CA California 90071 (US)**
• **BHATNAGAR, Avneesh
Los Angeles, CA California 90071 (US)**
• **POLAVARAPU, Sharat
Los Angeles, CA California 90071 (US)**

(74) Representative: **Barker Brettell LLP
100 Hagley Road
Edgbaston
Birmingham B16 8QQ (GB)**

(54) **SYSTEMS AND METHODS FOR DERIVING RATING FOR PROPERTIES**

(57) A computer-implemented system and method of analyzing property data for deriving property attractiveness ratings is provided. The method includes providing a Property Attractiveness Rating (PAR) application 101 executed by one or more processors 111 of a computing system. A computing system 100A may present a geographical map-based interactive user interface 132 for a user to search for a property on a map, receive a user input with one or more property attributes via the user interface, and search the database to obtain and present one or more properties of interest on the map. The computing system may execute a learning system of the PAR application to generate a PAR rating for the selected property of interest. The computing system may present to the user the generated PAR of the selected property of interest with respective property information on the map.

FIG. 1A

**Description**

**CROSS-REFERENCE TO RELATED APPLICATION**

This application claims the benefit of United States Non-Provisional Patent Application Ser. No. 16/944,982, filed July 31, 2020, and entitled "System and Method for Deriving Rating for Properties". The contents of the above-identified application are incorporated herein by reference in its entirety.

**TECHNICAL FIELD**

The present disclosure relates to deriving a rating for properties, and more specifically to applying data processing and learning methodologies to analyze property data for deriving property attractiveness ratings for properties globally.

**BACKGROUND**

Real estate has provided a vital part of the human experience. Real estate data may be used effectively to produce faster and better outcomes for all parties in the real estate value chain. Real estate data may be connected at a significant scale in both types and geographies. Buildings or property may be the natural anchors for data in the real estate sector, upon which hundreds of attributes may be collected and analyzed. For example, one attribute, the net operating income of a commercial building, can inform financial desirability for companies looking to acquire real estate assets. The proximity of food or transit options may inform how individuals or companies view location attractiveness of properties in an area. Many core building attributes such as square feet, year built, number of stories, and tax are critical to underwriting studies. Data in real estate may be complicated by the vastness of the real estate sector itself. Data in real estate may be measured based on the volume of transactions, the geographically wide asset distribution, the myriad of sources recording and originating data, and a highly complex and layered value chain.

For professionals in the industry or sophisticated buyers or investors, it may be a normal activity to gather the overall rating or score of a single property, building or a group of properties that may be of interest to the individual. Such a rating may be derived from a multitude of factors and variables and may not be fixed for an extended period of time. While several variations of solutions may exist in the marketplace, there is seldom a verifiable method to determine a consistent rating other than conventional wisdom or experience of a single individual or corporate entity. Moreover, since there isn't a verifiable and deterministic method of arriving at such a rating, it is difficult to maintain the provenance of the rating and making such ratings susceptible to legal contention may cause an unnecessary investment and not make the projected return.

**SUMMARY**

In accordance with some embodiments of the present disclosure, there is provided a computer-implemented method for analyzing property data to deriving property attractiveness ratings for properties globally. The method can include providing a Property Attractiveness Rating (PAR) application executed by one or more processors of a computing system. The method can include executing the PAR application to cause the computing system to perform operations of storing data associated with a plurality of properties database, and presenting a geographical map-based interactive user interface on a display of a user computing device for a user to search for at least one property on a map. The method can also include executing the PAR application to cause the computing system to perform operations of receiving a user input with one or more property attributes via the geographical map-based user interface, and searching the database to obtain and present one or more properties of interest on the map based on the user input. The method can further include executing the PAR application to cause the computing system to perform operations of receiving a user selection of a searched property of interest on the map via the geographical map-based user interface, generating a PAR for the selected property of interest, and presenting the generated PAR of the selected property of interest with respective property information on the map on the geographical map-based user interface.

Furthermore, in accordance with some embodiments of the present disclosure, there is provided a computing system comprising one or more processors, and one or more non-transitory computer-readable storage devices storing computer-executable instructions. The computing system may execute a Property Attractiveness Rating (PAR) system being stored as the computer-executable instructions. The one or more processors, when executing the instructions, causes the computing system to perform operations of storing data associated with a plurality of properties in a database, and presenting a geographical map-based interactive user interface on a display of a user computing device for a user to search for at least one property on a map. The one or more processors, when executing the instructions, causes the computing system to perform operations of receiving a user input with one or more property attributes via the geographical map-based user interface, and searching the database to obtain and present one or more properties of interest on the map based on the user input. The one or more processors, when executing the instructions, causes the computing system to perform operations of receiving a user selection of a searched property of interest on the map via the geographical map-based user interface, generating a PAR for the selected property of interest, and presenting the generated PAR of the selected property of interest with respective property information on the map on the geographical map-based user interface.

Furthermore, in accordance with some embodiments of the present disclosure, there is provided a computer program product comprising one or more computer-readable storage devices having a Property Attractiveness Rating (PAR) system encoded as computer-executable instructions. The computer program product, when executed by one or more processors of a computing system, causes the computing system to perform operations of storing data associated with a plurality of properties in a database and presenting a geographical map-based interactive user interface on a display of a user computing device for a user to search for at least one property on a map. The computer program product, when executed by one or more processors of a computing system, causes the computing system to perform operations of receiving a user input with one or more property attributes via the geographical map-based user interface and searching the database to obtain and present one or more properties of interest on the map based on the user input. Further, the computer program product, when executed by one or more processors of a computing system, causes the computing system to perform operations of receiving a user selection of a searched property of interest on the map via the geographical map-based user interface, generating a PAR for the selected property of interest; and presenting the generated PAR of the selected property of interest with respective property information on the map on the geographical map-based user interface.

Features which are described in the context of separate aspects and/or embodiments of the invention may be used together and/or be interchangeable wherever possible. Similarly, where features are, for brevity, described in the context of a single embodiment, those features may also be provided separately or in any suitable sub-combination. Features described in connection with the system may have corresponding features definable and/or combinable with respect to a method or vice versa, and these embodiments are specifically envisaged.

## BRIEF DESCRIPTION OF THE DRAWINGS

The accompanying drawings, which are incorporated in and constitute part of this specification, and together with the description, illustrate and serve to explain the principles of various example embodiments. In addition, it should be understood that any figures which highlight the functionality and advantages are presented for example purposes only. The disclosed methodology and system are each sufficiently flexible and configurable such that they may be utilized in ways other than that shown.

FIG. 1A illustrates an example computing system 100A for providing property attractiveness rating according to some embodiments of the present disclosure.

FIG. 1B illustrates another example computing system 100B for providing property attractiveness rating according to some embodiments of the present disclosure.

FIG. 2 is a diagram of an example Property Attractiveness Rating (PAR) system according to some embodiments of the present disclosure.

FIG. 3 is a diagram of an advanced visualization layer of an example PAR system according to some embodiments of the present disclosure.

FIG. 4 is a diagram of a PAR data layer of an example PAR system according to some embodiments of the present disclosure.

FIG. 5 illustrates an example process that may derive and generate a property attractiveness rating for a building or property in a practical application in accordance with some embodiments of the present disclosure.

FIG. 6 shows a diagram illustrating example screenshots of deriving a property attractiveness rating in a practical application in accordance with some embodiments of the present disclosure.

FIG. 7 illustrates an overview of example PAR algorithms utilized to derive and generate a property attractiveness rating in accordance with some embodiments of the present disclosure.

FIG. 8 illustrates an example diagram of a user interaction with a practical PAR application in accordance with some embodiments of the present disclosure.

FIG. 9 is a block diagram of an example computing device in accordance with some embodiments of the present disclosure.

## DETAILED DESCRIPTION

The present description is made with reference to the accompanying drawings, in which various example embodiments are shown. However, many different example embodiments may be used, and thus the description should not be construed as limited to the example embodiments set forth herein. Rather, these example embodiments are provided so that this disclosure will be thorough and complete. Various modifications to the exemplary embodiments will be readily apparent to those skilled in the art, and the generic principles defined herein may be applied to other embodiments and applications without departing from the spirit and scope of the disclosure. Thus, this disclosure is not intended to be limited to the embodiments shown, but is to be accorded the widest scope consistent with the principles and features disclosed herein.

Embodiments of the present disclosure describe systems and methods of deriving ratings for buildings or properties. Embodiments described herein may facilitate the derivation and distribution of property attractiveness ratings for real estate buildings and properties across the world where public and private records may exist, by utilizing sophisticated processing systems and multiple analytics modules of a Property Attractiveness Rating (PAR) system.

According to the embodiments of the disclosure, an interactive application may be provided and delivered to an end user either as a mobile application 135 running on a computing device 130 or a web browser application 134, which allows the user via a user device to select a particular area or a singular point of interest on a geographical map-based interactive user interface. Further, the user may interact with the selected area or points of interest via the interface to review a property attractiveness rating which is delivered using a learning system with a set of modules. A learning system may be trained to learn based on several inputs and select the appropriate algorithm from a template of algorithms to derive and generate the property attractiveness rating.

In this context, a Property Attractiveness Rating (PAR) system may encapsulate a singular process to ingest several variables in real time and produce a single output or an outcome that embodies the rating of a building or a property. The PAR system may be established and deployed to provide real time solutions in response to user requests for property ratings.

Embodiments described herein address a practical computer-centric problem of providing a property attractiveness rating system for deriving and generating a property attractiveness rating for a building/property based on property data description Further, embodiments described herein may provide technology-based improvements for collecting and transforming proprietary and third-party data through a multi-layered, complex data system and resolving non-value adding complexity within data into a far more usable property attractiveness rating (PAR) by utilizing a combination of property data analysis and machine learning techniques.

The embodiments of the present disclosure PAR system may be implemented as one or more computer programs or as application software executed on one or more computing devices that process property data of the business entity to provide property rating solutions. The improvements of the present disclosure as reflected in embodiments described herein may generate an automated property rating system to provide real time solutions for each respective entity.

As used herein, the term "Property Attractiveness Rating (PAR)" may include, but are not limited to, a PAR score, a property rating report, and any description for describing rating and comparable information associated with one or more properties and/or buildings.

As used herein, the term "model," "learning model," or "machine learning model" may include any type of a state-of-the-art model such as linear models and non-linear models.

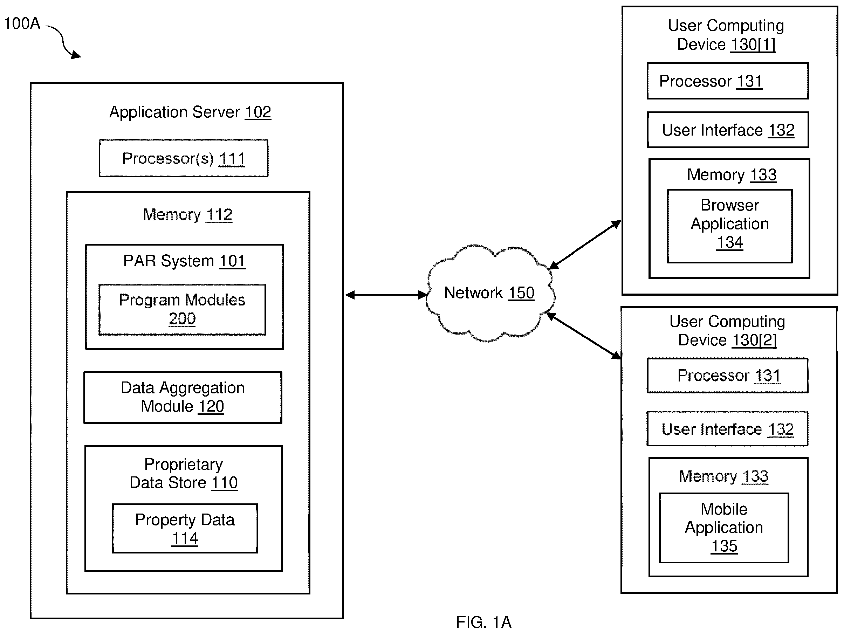

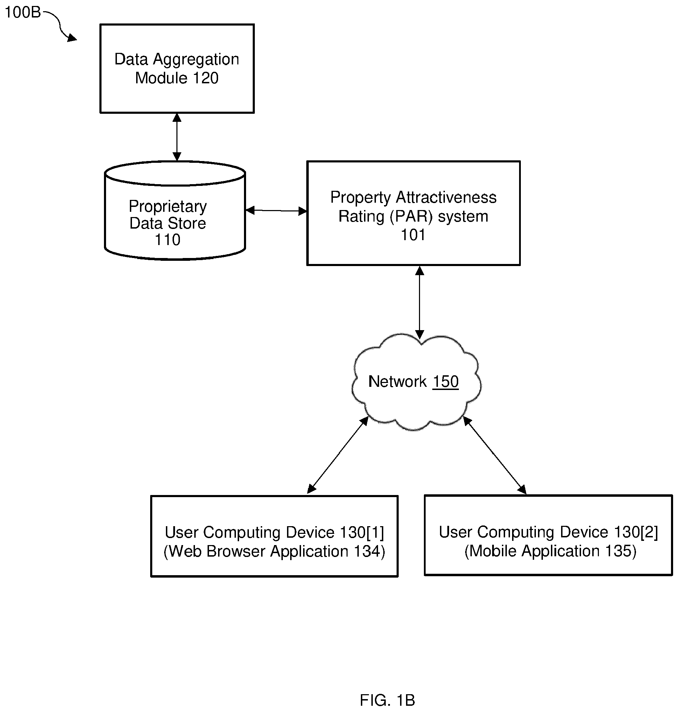

FIG. 1A illustrates an example computing system 100A configured to provide a property attractiveness rating according to some embodiments. FIG. 1B illustrates another example computing system 100B for providing property attractiveness rating according to some embodiments. As illustrated, system 100A may include an application server 102 (e.g., a server computing device) hosting a property attractiveness rating (PAR) system/application 101 (e.g., a PAR program). Application server 102 may include one or more processors 111, a memory 112 and a communication interface (not shown) for enabling communication between different computing devices via network 150. Application server 102 may be in communication with a plurality of user computing devices 130 within a public cloud-based environment using Amazon Web Services (AWS), Azure, or Google Cloud, or a hosted, private infrastructure environment via a network 150. For example, communication between the computing devices may be facilitated by one or more application programming interfaces (APIs).

Application server 102 may include an example property attractiveness rating (PAR) system/application 101, a proprietary data store 110 (e.g., database), and other program modules 200 which are implemented in the context of computer-executable instructions and executed by one or more processors 111 of application server 102. The PAR system 101 may be implemented in the context of computer-executable instructions and executed by one or more processors 111 for providing PAR computer-hosted services and/or providing a website with PAR services for a user to visit via a browser or a mobile application running on a computing device 130. Application server 102 may host an example property attractiveness rating system/application 101 which a user may access using a user computing device 130 via a browser application 134 or a mobile application 135 via network 150.

The PAR system 101 may be configured to analyze property data 114 and generate a property attractiveness rating. The PAR system 101 may include various program modules 200 that which may provide interactive mapping, visualization, searching and viewing mechanisms implemented by hardware, software, or combinations of hardware and software. Details related to program modules 200 of the PAR system 101 will be described below.

Data aggregation module 120 may aggregate data associated with real estate buildings or properties from different resources via network 150. For example, data may be sourced from existing internal master data stores, expert user inputs, appraiser inputs, 3rd party external platforms, crowd sourced inputs, and other available property stores. Data aggregation module 120 of the system 100A may be configured to retrieve and aggregate data through API calls via network 150 from various resources: 1) existing or internal property data stores; 2) external (third-party) real estate data stores and/or services; 3) data inputs by human professionals such as experts, appraisers or market researchers; and 4) crowd-sourced data inputs via the PAR system 101, and 5) other available property stores. Throughout this disclosure, example API calls are shown. It should be understood that any API calls shown are presented for example purposes only and are not intended to be limited to the APIs shown. The disclosed system is flexible and configurable such that other APIs may be utilized in ways other than that shown to request and retrieve additional data from the API. An example API call is illustrated below and may include a plurality of features or attributes associated with a building or a real estate property. For example, the plurality of features or attributes associated with the building or a real estate property may include property information, such as "address," "city," "zip code," "latitude," "longitude," "population within 5 mile," "transit score," and "walk score," etc.

```
Name: InputUrbanData
URL: https://pardatalayer.cbre.com/property/input-urban-data
OPERATION: INPUT
{
        data: {
                address: '2100 Ross Ave',
                city: 'Dallas',
                zip: '75201'
                latitude: 32.787709,
                longitude: -96.798176,
                class_a_property: 1,
                population_within_5mi: 87000,
                minutes_for_commute: 3.5,
                transit score: 4,
                walk_score:8
        }
}
```

Proprietary data store 110 may capture and store property data obtained by the data aggregation module 120 over the network 150. Proprietary data store 110 of the example system 100A may be a shared remote database, a cloud database, or an on-site central database. Proprietary data store 110 may be included in the application server 102, or coupled to, or in communication with, the application server 102 via network 150. Proprietary data store 110 may be an internal data store which may capture and store information relevant to display of property information as well as the property attractiveness rating generated and provided by the PAR system 101. Proprietary data store 110 may receive instructions or data from, and send data to, the PAR system 101. The property data associated with each building or real estate property may include a unique property identifier (ID), property images, a Property Attractiveness Rating (PAR), and a plurality of features or attributes, and any other property details or information. Proprietary data store 110 may be continuously updated with the property data which is aggregated, received, and generated by the PAR system 101.

Referring to FIG. 1A, the computing system 100A may include a plurality of user computing devices 130 (e.g., user devices or client devices). User computing device 130 may include a processor 131, a user interface 132, a memory 133, and a browser application 134 or a mobile application 135. Browser application 134 and mobile application 135 may facilitate user interaction with application server 102 and may provide a convenient interface to allow a user to interact with an online application product running in application server 102 via network 150. User computing device 130 may be any device configured to present user interfaces and receive inputs thereto. For example, user computing device 130 may be a smartphone, a personal computer, a tablet, a laptop computer, a personal digital assistant (PDA), or any computing system that is equipped with a web browser application 134, which may be used to provide a convenient interface to allow a user to interact with an online application product running in application server 102 via network 150.

A user may access services of the PAR system 101 hosted by an application server 102 in a computing system 100A as described in FIG. 1A and FIG. 1B. The user may access the PAR system/application 101 running on application server 102 using a browser application 134 through a user computing device 130[1] via network 150 after an appropriate authentication of the user with the PAR system/application 101. The user may access the PAR system/application 101 using a user mobile device 130[2] running a mobile application 135 of the PAR system/application 101 via network 150 after an appropriate authentication of the user with the PAR system/application 101.

Network 150 may be either internal (intranet) or external (internet) or other public or private networks or combinations thereof. The end user can access the PAR system/application 101 on the corporate intranet or via an internet connection outside the company firewall. Network 150 may allow the visual content, search results, property details and property attractiveness ratings to be delivered to a user computing device 130 operated by an end user.

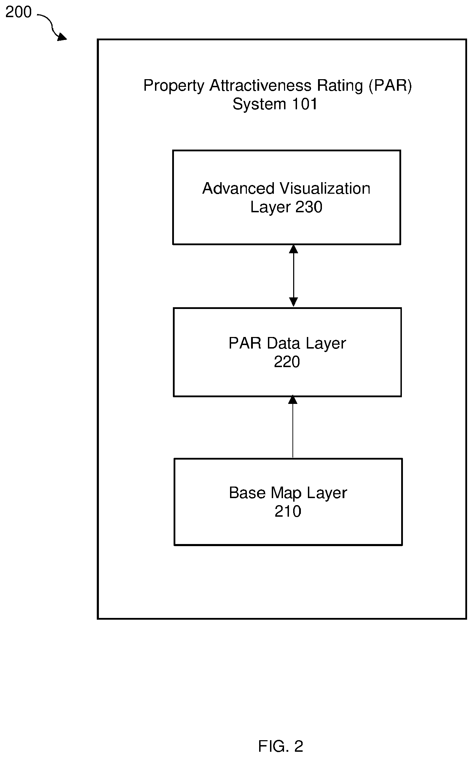

FIG. 2 schematically illustrates an example Property Attractiveness Rating (PAR) system 101 according to some embodiments of the present disclosure. The PAR system 101 may include a base map layer 210, a PAR data layer 220 and an advanced visualization layer 230. The PAR system 101 (e.g., CBRE PAR system) may select data stored in the proprietary data store 110. The proprietary data store 110 may ingest data from a data aggregation module 120 of FIGS. 1A and 1B.

**A base map layer 210**

A base map layer 210 in the PAR system 101 may be configured to present the geographical map-based interactive visual interface of the area or region around the search results in response to a user search request. In its default state, the base map layer 210 may determine the current user location and present a view within a preset radius around the user's location on a user interface of the user device 130 operated by the user. The user's location may be determined via the cellular connection, Wi-Fi positioning system (WPS) or GPS position of the user device 130. The base map layer 210 may bootstrap a map customized to the form factor of the user computing device 130 to provide a consistent visual experience to the user. The base map layer 210 may provide the initial scaffolding configuration for the map visualization and may contain only the schematic of the area of interest to the user.

**A PAR data layer 220**

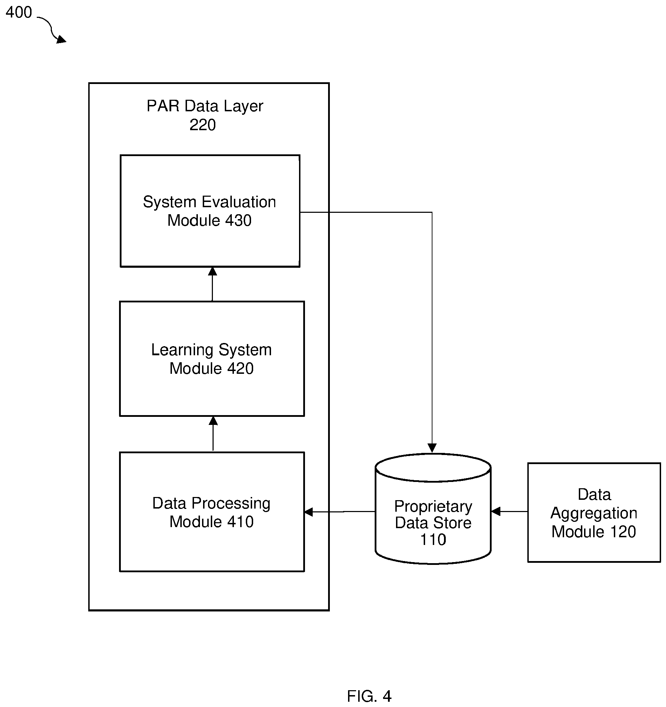

The PAR data layer 220 may be configured to pull data from the proprietary data store 110 and prepare the data to be integrated into the base map layer 210. The PAR data layer 220 may contain the modules illustrated in FIG. 4 and may allow for appropriate methods to be applied to ingested data for determining the Property Attractiveness Rating (PAR) for a building or property. Details related to the PAR data layer 220 will be described in FIG. 4 below.

**An advanced visualization layer 230**

The advanced visualization layer 230 may provide an interactive layer presented to an end user computing device 130. The advanced visualization layer 230 may provide an end user/client with a front-end interface such as a mobile application 135 or a browser application 134 to interact with the PAR system 101. The advanced visualization layer 230 may ingest inputs from the PAR data layer 220 and provide a visual of the underlying data as it is pinned on the base map layer 210.

The advanced visualization layer 230 may be configured to enable a computing device 130 operated by an end user/client to perform operations, including:

1) searching via an address or zip code, a single or set of properties;
2) navigating to points of interest generated as a result of the search;
3) selecting and zooming into a single area or single property;
4) displaying property details;
5) displaying property attractiveness rating(s);
6) receiving data entry from an end user or an individual possessing more information about a property or group of properties;
7) responding to requests and adjusting weight of factors contributing to the property attractiveness rating score to display sensitivity and impact of alternative assumptions;
8) displaying a menu of follow-on actions to user or consumer additional advisory services; and
9) displaying properties in a portfolio that may have changed status over a user-configurable time period, upon receiving a user upload of a property list.

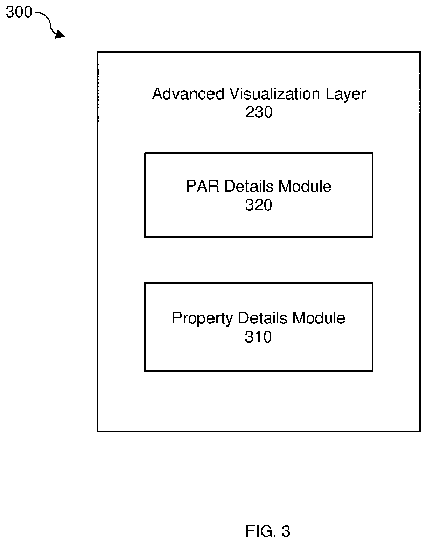

FIG. 3 illustrates a functional diagram of an example advanced visualization layer 230 according to some embodiments of the present disclosure. The advanced visualization layer 230 may interact with the PAR data layer 220 to present the user the capabilities described above. The advanced visualization layer 230 may include a property details module 310 which sources data from the PAR data layer 220 to present various attributes including images of a property.

**Property Details Module 310**

The property details module 310 may present specific property information such as, but not limited to:

1) Property address including zip code;
2) Property images;
3) Spatial and structure data (e.g., latitude, longitude, size, etc);
4) Comparable properties for the property being analyzed;
5) Urban data such as foot traffic, accessibility, etc;
6) Inputs from appraisers and other real estate experts; and
7) Inputs from end users.

**PAR Details Module 320**

The PAR details module 320 may provide a dynamically refreshed or updated property attractiveness rating retrieved from the PAR data layer 220. The property attractiveness rating may be continuously updated as a result of changes being made into the PAR data layer 220 due to the updated data ingestion from multiple sources including third-party, expert and crowd-sourced inputs. Both property details module 310 and PAR details module 320 may contain logic and visualization components to present relevant information to the user device 130. The visualization components may adapt to either touch inputs, gesture inputs or computer mouse- based inputs.

FIG. 4 is an example functional diagram of a PAR data layer 220 of the PAR system 101 according to some embodiments of the present disclosure. The PAR data layer 220 may include a data processing module 410, a learning system module 420 and a system evaluation module 430.

**Data Processing Module 410**

After the property data is obtained and aggregated by a data aggregation module 120, and stored in the proprietary data store 110, some fundamental and data preprocessing may be performed. Data processing module 410 may fetch the data from the proprietary data store 110 and cleanse the data. Data processing module 410 may perform actions such as fetching data from the data store, cleansing data, removing duplicates or irrelevant/incomplete records, creating a training set and testing the data received. The actions may be continuously performed as a background task and may not interfere or coincide with a user's interactions with the advanced visualization layer 230. Data processing module 410 may interact with a learning system module 420 which may select the best fit rating algorithm from a template of algorithms.

**Learning System Module 420**

Learning system module 420 may interact with system evaluation module 430 which may calculate the rating and create a final algorithmic model to determine the rating based on the data gathered so far. The system evaluation module 430 may update the proprietary data store 110 with the calculated rating for future consumption by property details module 310 and the PAR details module 320. Details related to learning system module 420 of the PAR system 101 will be described below.

**System Evaluation Module 430**

System evaluation module 430 may be a dynamic component and may react to any expert or crowd sourced data inputs from the advanced visualization layer 230. Any new data may be rated against the final model to determine the property attractiveness rating. System evaluation module 430 may create a final model and update the PAR score based on the updated property data in the proprietary data store 110.

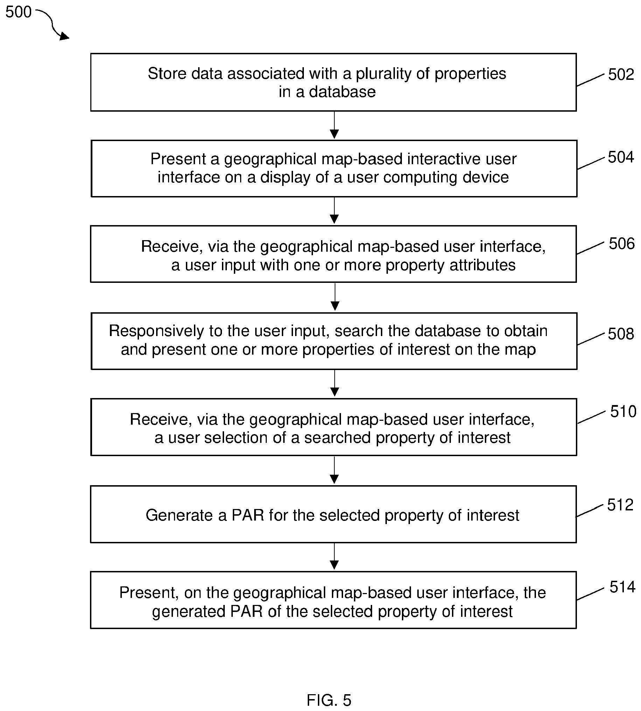

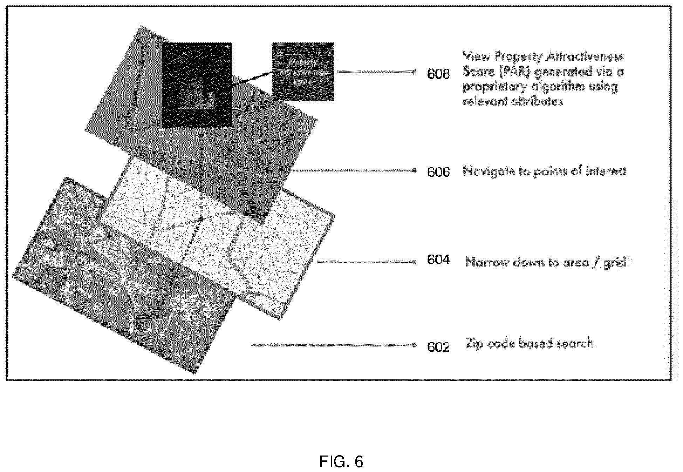

FIG. 5 illustrates an example process 500 that may derive and/or generate a PAR for a property in response to a user research request over a PAR system or platform in accordance with some embodiments of the present disclosure. The process 500 may be implemented as a sequence of operations that can be performed by one or more computers including hardware, software, or a combination in the above described systems. Thus, the described operations may be performed with computer-executable instructions under control of one or more processors. The order in which the operations are described is not intended to be construed as a limitation, and any number of the described operations can be combined in any order and/or in parallel to implement the process. FIG. 6 shows a diagram illustrating example screenshots of deriving a property attractiveness rating in a practical application in accordance with some embodiments of the present disclosure.

During the process 500, an interactive PAR application/system 101 may be provided and delivered to the user device 130 either as a mobile application 135 running on a mobile device or web browser application 134. The interactive PAR application/system 101 may allow the user to first select a particular area or singular point of interest in an intuitive manner. Further, by interacting with the selected area or points of interest, the user may review a property attractiveness rating which is delivered and/or generated using a set of modules. The set of modules of the learning system module 420 may learn based on several inputs and select the appropriate algorithm from a template of algorithms to deliver the rating. The model learning and selection methods may be deterministic and verifiable.

At step 502, the property data or information of a plurality of properties may be stored in a database (e.g., proprietary data store 110). The database 110 may ingest and store data aggregated from a data aggregation module 120 for various resources. The property data or information for each property may include a plurality of property attributes or features. Referring to FIGs. 1A and 1B, data aggregation module 120 of the PAR system 101 may be executed by one or more processors 111 of application server 102 to implement a data ingestion process to aggregate data associated with real estate buildings or properties from different resources via network 150. For example, data may be sourced from existing internal master proprietary data stores, expert user inputs, appraiser inputs, third party external platforms, crowd sourced inputs, and other available proprietary data stores.

At step 504, the advanced visualization layer 230 of the PAR system 101 may present a geographical map-based interactive user interface on a display of a user device 130 for a user to search for at least one property on an electronic map.

At step 506, the PAR system 101 may receive a user input with one or more property attributes via the geographical map-based user interface which enables the user to navigate, zoom, enter and search property data. For example, the PAR system 101 may be executed to display the user interface components allowing the user to enter a property address or zip code to search for the property and corresponding searching the property attractiveness rating(s) of one or more properties in an area. As illustrated in a screenshot of 602 of FIG. 6, the user may enter a zip code via the user interface for searching the property attractiveness rating(s) of one or more properties in an area. Based on the zip code entered by the user, the base map layer 210 of the PAR system 101 may determine the zip code area with the underlying data on the map for presenting the map-based view of the zip code area. The advanced visualization layer 230 of the PAR system 101 may present the zip code area on the geographical map-based user interface display on the user device 130.

At step 508, responsively to the user input, the PAR system 101 may search the database 110 to obtain and present one or more properties of interest on the map. For example, in response to a user input such as a property address or a zip code, the PAR system 101 may present one or more properties of interest in the area associated with a property address or a zip code on the map on the geographical map-based interactive visual interface. In some embodiments, the PAR system 101 may receive new data associated with one or more properties which are not stored in the database 110 via a data ingestion process. The new data may be received through geographical map-based user interfaces associated with a plurality of user computing devices 130 operated by users. The PAR system 101 may dynamically update the data in the database 110 with the new data.

At step 510, the PAR system 101 may receive a user selection of a searched property of interest on the map via the geographical map-based user interface. The geographical map-based user interface may enable the user to filter the searched property data, navigate, zoom to the property area and select a searched property of interest displayed on the map via the geographical map-based user interface. For example, as illustrated in a screenshot of 604 of FIG. 6, the map-based visualization layer 230 may allow the user to subsequently narrow down to an area and or a grid using touch/gesture-based control or use a computer mouse for area selection. As illustrated in a screenshot of 606 of FIG. 6, the user may further interact with the narrowed down area or grid by zooming and navigating to a specific point of interest on the map via the geographical map-based user interface.

At step 512, the PAR system 101 may generate a PAR based on the property data of the selected property of interest. The PAR system 101 may utilize data processing module 410, learning system module 420 and system evaluation module of PAR data layer 220 which are executed by a hardware processor to derive and generate a PAR for the selected property of interest. The derived and generated PAR may include a PAR score, a property rating report, or combinations thereof. The derived and generated PAR may include property details of one or more related properties and or buildings.

At step 514, the derived and generated PAR of the selected property of interest with respective property information may be presented on the map via the geographical map-based user interface. The PAR system 101 may utilize the property details module 310 and the PAR details module 320 to present the derived and generated PAR on the user interface. As illustrated in a screenshot of 608 of FIG. 6, the user may further interact with the narrowed down area or grid by navigating to a specific point of interest and then view the rating of a property or set of properties along with additional property details such as property images, spatial data, comparable properties, urban data, etc. The map-based visualization layer may interact with the PAR data layer 220 to present details of the property and the property attractiveness rating (PAR) score.

In the process 500, data processing module 410, learning system module 420 and system evaluation module 430 of the PAR data layer 220 of the PAR system/application 101 may be replicate to derive the PAR score in response to user requests if necessary. The PAR system/application 101 may be executed by the one or more processors 111 to derive a PAR score through a sequence of processes. For example, a data ingestion process may be executed to receive the data associated with a plurality of properties into the database. A data processing process may be executed to process the data to create a training dataset and a test dataset. A learning process may be executed to train a plurality of models of a learning system in the PAR system with the training dataset and the test dataset. An evaluating process may generate a final model from the trained models. The evaluating process may be executed to apply the final model to the selected property of interest to generate the PAR of the selected property of interest.

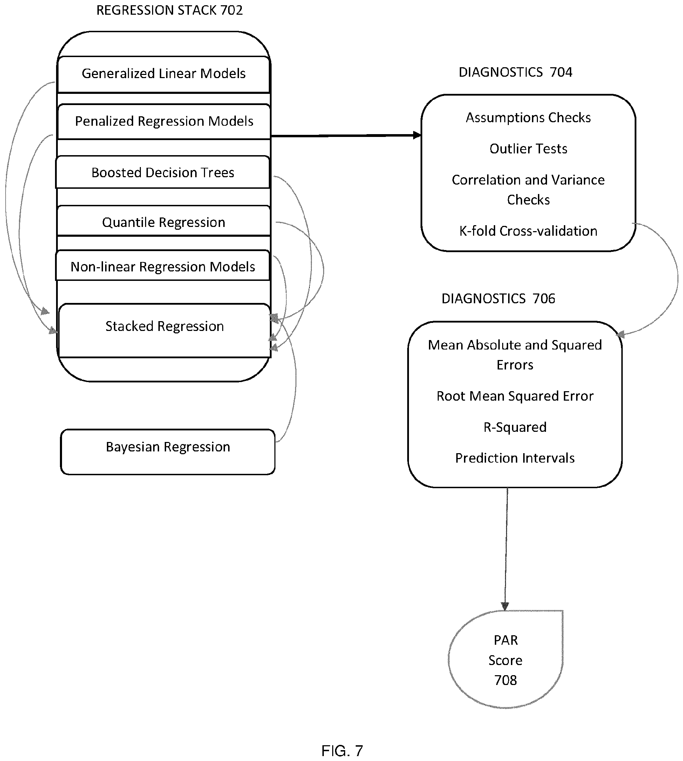

FIG. 7 illustrates an overview of example PAR algorithms and methods utilized to derive and generate a property attractiveness rating in accordance with some embodiments of the present disclosure. FIG. 7 provides a brief overview of some example PAR algorithms and methods for training and building a learning system module 420 of the PAR data layer 220 in the PAR system 101. For example, a regression stack 702 may include a plurality of algorithms or models such as generalized linear models, penalized regression models, boosted decision trees, quantile regression, non-linear regression models, and Bayesian regression. Other regression techniques may also be used. In some embodiments, the example regression algorithms in the regression stack 702 may be trained with property feature data to build the learning system module 420. The learning system module 420 may receive the property feature data from the data processing module 410. Further, the trained learning system module 420 may interact with the system evaluation module 430 which creates a final model to determine a PAR score 708 for a property in response to user inquiries.

The data processing module 410 of the PAR data layer 220 may perform actions to create property feature data based on the data stored in the database 110. Data processing module 410 of the PAR system may be executed by one or more processors 111 of application server 102 to implement a data processing process to perform actions such as fetching data from the data store, cleansing data, removing duplicates or irrelevant/incomplete records, creating a training set and testing the data received.

## FETCH DATA, CLEANSE AND, SPLIT IT INTO TRAINING AND TEST DATASETS

Fetching data, cleansing data, and splitting data into training and test sets will now be described with reference to FIG. 1 and FIG. 4. Data processing module 410 may fetch the data by establishing a secured channel to ingest the data from the proprietary data store 110. An API may be used to fetch data from the proprietary data store 110 in a secured way. The data in the proprietary data store 110 may be in an original or raw format either in a system like a database or a flat file. The data may be stored as a labeled multi-dimensional array that may help stamp data with labels and thereby index them in a way that may make for quick retrieval and robust storage. Once the data is stored in the database 110, cleansing data may be performed first. Example procedures include the following procedures.

The data cleansing phase may involve looking for missing values and deciding whether to fill them in or leave them as is, converting all values into a numerical format, for instance, converting true/false into 1/0 or binning a range of values into categories. For example, data processing module 410 may take a count of missing values across all variables and rank them. And then, it might fill any missing values in a variable(s) with the most frequent type or its mean, etc. Thus, the data may be as complete as possible.

Data processing module 410 may encode all categorical variables and convert any remaining non-numerical variables into numerical factors. One way to do this is to generate dummy levels for each data observation. As an example, there are three Property Types: Commercial, Residential and Mixed. For each observation, data processing module 410 may generate a matrix of these three levels like:

| Commercial | Residential | Mixed |
|---|---|---|
| 1 | 0 | 0 |
| 0 | 0 | 1 |
| 1 | 0 | 0 |
| 0 | 1 | 0 |

A property can only be of one type. For example, the first one is Commercial, the second is Mixed and so on. A non-trivial matrix or a set of matrices may be used to represent the linear or non-linear combination of the variables. A matrix [m, n] is an array of m rows and n columns wherein a matrix of one row or one column is called a row vector and column vector, respectively. The matrix may help compute in an efficient and reliable way the estimates for each variable and then the combination of such to derive the rating of the property.

The data preprocessing may include marking any duplicate data with flags such that the duplicate data is not be processed any further, checking for the validity of the data to identify incorrect data types such as strings having unexpected numbers or invalid date formats such as dd-mm-yy. Further, the data processing module 410 may perform data cleansing such as removing duplicates and correcting invalid data in the data aggregation module 120.

The data processing module 410 may perform preprocessing operations on the cleansing data to construct data features. An example method of such a data transformation may be outlined below:

1) Read data with larger and varying values (for ex: 3000, 200, 343, 4500, 693, 90,515, 600, 7891, 23210, 453)
2) Apply base-10 logarithmic transformation (yielding 3., 2., 2., 3., 2., 1., 2., 2., 3., 4., 2.)
3) Store and End

In some embodiments, data processing module 410 of the PAR data layer 220 may receive several variables from different systems as inputs and analyze them to select the essential variables. The essential variables may be used to define and construct the internal and external features of a building or a property. A variable may be a factor or an attribute about the property or a building that may affect the outcome of the PAR system.

The defined and constructed features may be used to call out corresponding variables. The outcome may be represented by a combination of a plurality of features that essentially facilitate understanding the relationship between the features and the outcome. The outcome may depend on the relationship among the features and may be called a dependent variable. The set of features that yield the dependent variable or the system outcome may be independent and called independent variables. Each of these independent variables may have an estimate associated with each of them. The sum of products of respective independent variables and respective estimates may reliably produce the outcome or the dependent variable.

Once all the variables (e.g., features) have been preprocessed, the data processing module 410 may fetch the data from the proprietary data store 110 to select features that are essential for training and building the learning system module 420 for determining the PAR score 708 shown in FIG. 7. A variety of methods may be deployed to select features for determining the PAR score 708. An example method to select and create features may be defined with the following steps:

1) Select all the features that have been fetched and cleansed;
2) Apply a model that ranks the features by their importance. Identify the pair of best and least important feature;
3) Remove the pair from the set of features;
4) Rerun the model to get a new pair of best and least important feature until all the features are exhausted;
5) Rank each pair from steps 2 and 4 on the order of their elimination;
6) Create top five, ten, fifteen and two features; and
7) Store the created features to proprietary data store 110.

The described example method and other similar methods may be applied to features to facilitate narrowing down and selection of the features that are essential to determine the PAR score 708.

Once the features or feature data are selected as a result of the operation of the data processing module 410, a series of models (e.g., machine learning models) may be tested to determine which models fit the selected feature data the best to help compute the PAR score. The models may be any type of state-of-the-art model, such as linear models or non-liner models. Data processing module 410 may interact with a learning system module 420 which may select the best fit rating algorithm from a template of algorithms.

In some embodiments, learning system modules 420 may include a host of methods and algorithms that help infer a function $f$ that maps input variables $\chi$ in such a way that the mapped function $f(\chi)$ generates the data and generalizes to any new input variables. The described method may be called Regression.

**An Outline of Regression**

Regression models the relationship between a dependent variable or an outcome and one or more predictor variables (e.g., independent variables). A simple example in commercial real estate may be how access to public transport (independent variables) affects the asking price of a building (dependent variable or outcome). This linear relationship between the asking price (dependent variable Y) and the access to public transport (independent variable X) can be defined as:

$$Y = b_0 + b_1 X$$

Where bo is known the intercept or the constant and $b_1$ is the slope of X. In some embodiments, a Multiple linear regression (MLR) method may be used to model the linear relationship between one or more independent variables and a dependent variable. For example, a set of predictor variables or independent variables may be denoted as $X_1$, $X_2$, $X_3$ and so on. In that case, the equation of the linear relationship transforms into:

$$Y = b_0 + b_1 X_1 + b_2 X_2 + b_3 X_3$$

This equation that defines the model tries to find the best line to predict the asking price as a function of the set of predictors. The data may not exactly fall on the line. Thus, the equation may include an error term:

$$Y = b_0 + b_1 X_1 + b_2 X_2 + b_3 X_3 + \varepsilon$$

Because a line may be fitted onto the data, fitted values or estimates are obtained as opposed to the original known values. Thus, the target equation may become:

$$\hat{Y} = \hat{b}_0 + \hat{b}_1 X_1 + \hat{b}_2 X_2 + \hat{b}_2 X_2 + \hat{b}_3 X_3$$

The residuals may then be the difference between the fitted values and the known values:

$$\varepsilon_i = Y_i - \hat{Y}_i$$

The regression line which helps fit the data is then essentially the estimate that minimizes the sum of squared residuals (squaring helps solve for any negative values affecting the overall sum). In some embodiments, an Ordinary Least Squares regression method may be used to find the regression line of best fit for a set of data.

## DIAGNOSTICS 704

After the feature data is modeled through a regression equation, feature data accuracy and robustness need to be checked by using different diagnostics methods before training a model. As shown in a block of diagnostics 704 in FIG. 7, some example checks may include assumptions checks, outlier tests, correlation and variance checks, etc.

### Assumptions Checks

The PAR system 101 may check how normally distributed PAR scores are. As normal distribution is a prerequisite for regression, with mean zero and variance one, it is extremely important to normally distribute data sets that are not otherwise normally distributed. For example, the PAR system 101 may apply transformations such as Log Transform, Box Cox, etc, which may yield a normally-distributed data set.
Another way to check is to take n number of samples, then the t-statistic may follow Student's t-distribution with *n-1* degrees of freedom.

### Outlier Tests

Standardized residuals, or the number of standard errors away from the regression line, define the outliers and are described below. They are plainly the data that is far from the usual values or out of range. Usually, such data is dropped after the impact of such elimination on the model is assessed and neutralized.

### Correlation and Variance Checks

The PAR system 101 may check for correlations of all variables with PAR score 708, and between the features as well. This helps eliminate variables that are already correlated with others, and thereby helps select the best variables that describe the data.
Variance in data may be another check that needs to be done. For instance, the PAR system 101 may check why a range of values have more errors than another range thereby making the model incomplete. If such large variance exists, then the data range is smoothed to minimize the impact of variance.

**K-fold cross-validation**

The preprocessed feature data or datasets may be used to train and build a model of the learning system module 420. The feature data may be split into a training dataset and a testing dataset. There is a possibility that the testing dataset is easier or very difficult. An alternative is cross-validation, a way to evaluate how well the model may perform on data that it has not seen before. In K-fold Cross Validation, the dataset is split into K sections/folds where each fold is used as a testing set at some point. Assuming the dataset is split into K=5 folds, in the first iteration, the first fold or 1/5th of the data is used to test the model and the rest to train. In the second iteration, the second fold is used for testing and the rest for training. This process may be repeated until each fold of the five folds have been used as the testing set.

The learning system module 420 may represent a learning system in the PAR system and include a plurality of models. A learning process may be executed by one or more processors 111 of application server 102 to train the plurality of the models. The plurality of the models may be trained in an optimal way such that it produces an outcome from the combination of independent variables with near-consistent results. The training process may involve taking a sizable sample of the features that may be tuned by usually, but not necessarily, weights or parameters so that the model begins to yield near-consistent outcomes. In some embodiments, the learning process may be executed to apply multiple regression models to determine a combination of attributes of a property which are well-suited to derive a PAR score for a property. The learning process may be executed to select a Multiple Linear Regression (MLR) model that involves a linear combination of variables that are linearly independent and normally distributed. In some embodiments, the learning process may be executed to apply a Polynomial Regression model that involves a non-linear combination of variables that are linearly independent and normally distributed. In some embodiments, the learning process may be executed to apply a Weighted Regression model that involves a linear or non-linear combination of variables that are linearly independent and normally distributed with weights assigned to each variable as determined to be necessary.

Once the model is trained enough to produce outcomes that are repeatable, the model is tested against that sample space that was left out from the training phase. The test data may be chosen such that its features embodying a property already have a rating, which can be tested against the outcomes when the model is applied on the test data. In some embodiments, a hard-code processing may need at least one thousand properties, across geographies, property types, and price buckets, with a PAR score to be used as the baseline.

**DIAGNOSTICS 706**

With the checks described above, a model performance may be evaluated further to assess its accuracy. As shown in a block of diagnostics 706 in FIG. 7, four example measures outlined below may be used to access and evaluate the model performance.

Root Mean Square Error (RMSE) represents the sample standard deviation of the residuals calculated as:

$$\text{RMSE} = \sqrt{\frac{1}{n}\sum_{j=1}^{n}(y_j - \hat{y}_j)^2}$$

Mean Absolute Error (MAE) is the average of the absolute difference of the residuals calculated as:

$$\text{MAE} = \frac{1}{n}\sum_{j=1}^{n}|y_j - \hat{y}_j|$$

RMSE differs from MAE in the sense that it penalizes any large variance between the predicted and known values or if the residuals are larger.

R-Squared may be used as a statistical measure in a regression model that determines the proportion of variance in the dependent variable that may be explained by the independent variable. R-squared may show how well the data fits the regression model.

Prediction Intervals may be used to assess the model and determine how much confidence can be placed in a predicted value by determining the uncertainty around it. More precisely, after a sufficient number of values is recorded, a prediction interval is an estimate of an interval in which a future value will fall, with a certain confidence level. For instance, a prediction interval of 95% for a value or a range of values would mean that as more values are being recorded, this new value or the range of values may occur in 95% of such cases.

An evaluating process may be executed by one or more processors 111 of application server 102 to evaluate and select the appropriate and/or best algorithm from a plurality of trained algorithms/models based on the measures of diagnostics 706. With one or more trained models, the trained learning system module 420 may interact with the system evaluation module 430 which creates a final model to determine a PAR score 708 for a property in response to user inquires. The final model may be generated based on the updated data in the database 110. The final model may be applied to the selected property of interest to generate the PAR of the selected property of interest. The evaluating process may be executed to update the generated PAR of the selected property of interest in the database 110. In some embodiments, the property attractiveness rating may manifest as a point on a scale, or as a classification.

The PAR (score) 708 may be delivered and presented to a user on a geographical map-based interactive user interface over the network 150 via the advanced visualization layer 230 of the PAR system 101. A user may be able to deconstruct the property attractiveness rating to a certain degree and be able to understand the constituent driving factors behind a given building rating. A user may potentially be able to toggle and/or adjust assumptions on a subset of variables that are consequential to the rating calculation and observe the resulting rating differential. That is, by leveraging systems and models, the property attractiveness rating may provide a broad set of industry players a viewpoint on the relative attractiveness of a building vs different levels of geographical groupings (e.g., the immediate surroundings, the district, the metro area, etc.). For example, a financial institution may utilize the PAR score and/or the PAR report as an additional perspective to its underwriting process on a given building. An existing building owner may leverage the PAR perspective to assess how its building may be perceived relative to comparable buildings along a radius and/or directly update various building attributes to ensure the most accurate information informs the way a given building is evaluated. The prospective tenant may leverage the rating as a point of view in considering options for relocation. A property manager may leverage the rating to understand what makes surrounding buildings rate differently. A potential investor may leverage the rating to inform relative acquisition attractiveness. The property attractiveness rating may be intended to replace existing processes that various types of entities in the real estate value chain may follow. It provides a means by which various entities can consume a distilled perspective on an individual building as derived from considering a large number of factors, including property information, for example.

During a process of system evaluating with the system evaluation model 430, based on the new or updated property data aggregated or received by the PAR system, new derived property attractiveness ratings and newly selected models may be created, updated and or added to the proprietary data store 110 for future retrieval, as illustrated in FIG. 4.

In some embodiments, as illustrated in FIG. 1A, the PAR system 101 may be made available via application programming interfaces (APIs), thus allowing the PAR system to become a systematic input to a variety of use cases. For example, the PAR data layer 220 of the PAR system 101 may run as a server-side component which may be decoupled from the mobile or web-based application running on the end user's device 130. Data from this component of the PAR system 101 may be accessed via REST based APIs that the PAR data layer 220 presents to components of the advanced visualization layer 230. These APIs may reside behind an API gateway which authenticates, authorizes, throttles and controls access to such data thereby providing secure and governed access to the data. For example, the API calls may be utilized to facilitate communications among the PAR system 101, database 110, data aggregation module 120 and user devices 130 for retrieving, transmitting and updating information in a secured way.

Below is an example of an API call used for a request to get the property details served by the PAR data layer 220 to the property details module 310.

```
Name: PropertyDetails
        URL: https://pardatalayer.cbre.com/property/request-details
        OPERATION: POST //invokes API with payload
        PAYLOAD: //information passed to retrieve data
            {
                    property info: {
                            address: '2100 Ross Ave, Floor 3, Suite 301',
                            city: 'Dallas',
                            zip: '75201'
                    }, requester: {
                                name: 'JoeClient',
                                email: 'joexxx@joeclient.com',
                            ph: '111-111-1111'
                            }
            }
```

The API call described above may retrieve relevant information back to the end user's device to be processed for display by the property details module 310. It may include a unique identifier (ID) of the property as stored in the proprietary data store 110.

Below is another example of an API call used for a request to get the property attractiveness rating served by the PAR data layer 220 to the PAR details module 320.

```
Name: PARDetails
      URL: https://pardatalayer.cbre.com/property/request-par-details
      OPERATION: POST //invokes API with payload
      PAYLOAD: //information passed to retrieve data
              {
                      property info: {
                              address: '2100 Ross Ave, Floor 3, Suite 301',
                              city: 'Dallas',
                              zip: '75201'
                      },
              }
```

Using the API call described above, a relevant property attractiveness rating may be retrieved back to the end user's device 130 to be processed for display by the PAR details module 320 which overlays data processed by the property details module 310.

Below is another example of an API call used for a request to update information on a property by an expert professional, such as a researcher or an appraiser, to the PAR data layer 220. This may imply a user interacting with the advanced visualization layer 230 of the PAR system 101 to enter certain information about a property.

```
      Name: UpdateDetailsByExpert
      URL: https://pardatalayer.cbre.com/property/update-property-details-expert
      OPERATION: PUT
      {meta: {
                      propertyid: '11345698',
                      assessedvalue: '550,000',
                      source: 'AppraiserCBRE01' },
              data: {
                      propertyid: '11345698',
                      address: '2100 Ross Avn',
                      city: 'Dallas',
                      zip: '75201',
                      assessedvalue: '550 ,000',
                      currentuse: 'office',
                      actualage: '50years',
                      netrentablearea: '275sqft',
                      pricepersqft: '2000'
              }
      }
```

The API call described above may update certain information about the property back to the proprietary data store 110 which is then picked up by the data processing module 410 and may have an impact in the property attractiveness rating of the particular property.

Below is an example of an API call used for a request to update information on a property via a crowdsourced mechanism to the PAR data layer 220. This may imply a user interacting with the advanced visualization layer 230 to enter certain information about a property.

```
                  Name: UpdateDetails

                  URL: https://pardatalayer.cbre.com/property/update-property-details

                  OPERATION: PUT

                  {

                          meta: {
```

```
                propertyid: '11345698',
                source: 'user01'
        },
        data: {
                propertyid: '11345698',
                address: '2100 Ross **Avenue'**,
                city: 'Dallas',
                zip: '75201',
                assessedvalue: '550 ,000',
                currentuse: 'office',
                actualage: **'40years'**,
                netrentablearea: **'271**sqft',
                pricepersqft: **'1510'**
        }
}
```

The API call described above may update certain information about the property back to the proprietary data store 110. The items in bold show the type of updates a non-expert user may make. These updates may need an additional verification step before they are committed as 'valid' updates and then passed onto the data processing module 410 and may have an impact in the property attractiveness rating (PAR) of the particular property.

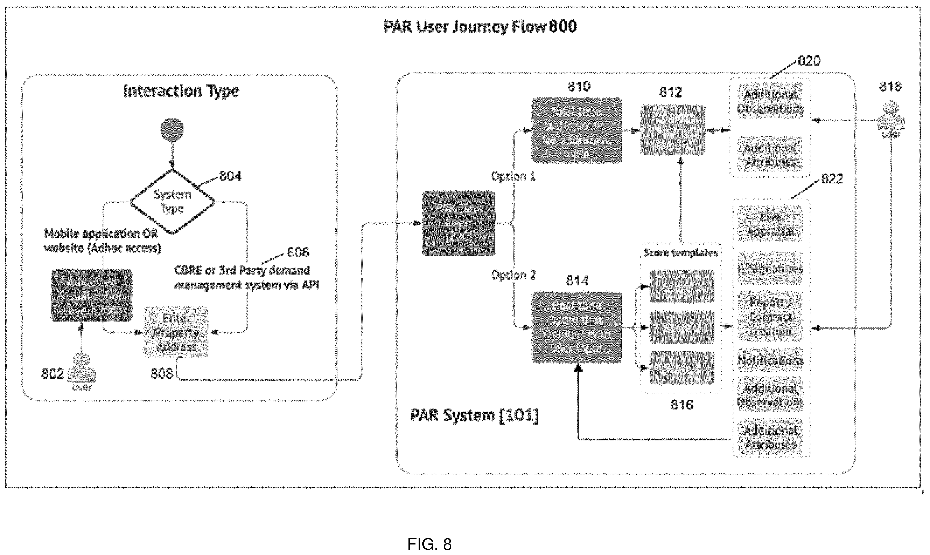

FIG. 8 illustrates an example diagram 800 of a user interaction with a practical PAR application in accordance with some embodiments of the present disclosure. The example diagram 800 may include a process in which an end user 802 may interact with the PAR system/application 101 to search a property via a user device 130 for obtaining a PAR or a property rating report 812 of the property. Further, the example diagram 800 may include a process in which the PAR application may derive and generate the corresponding PAR and/or a property rating report 812 based on an input of the end user 802, the searched property information and inputs from one or more users 818.

As illustrated in FIG. 8, an end user 802 may interact with the PAR system/application 101 in different ways or with different types of systems 804. In one embodiment, an end user 802 may access the advanced visualization layer 230 of the PAR system/application 101 via a mobile application 135 running on a user mobile device 130[2] or a website via a web browser application 134. In one embodiment, the end user 802 may access the PAR system/application 101 through the website or a management system via API 806. The advanced visualization layer 230 may present a geographical map-based interactive user interface on a display of an end user device 130 for the end user 802 to enter a property address 808. In response to the property address entered by the end user 802, the PAR data layer 220 of the PAR system/application 101 may derive and generate the corresponding property attractiveness rating with details of the property on the map of the user interface. The PAR data layer 220 may provide different options to present the rating scores in real time.

In some embodiments, the PAR data layer 220 may search for at least one property received via geographical map-based interactive user interface. The PAR data layer 220 may search the database 110 for the property address 808 entered by the end user and process the searched property data to derive a static property attractiveness rating score 810 with no additional input in real time. The PAR data layer 220 may generate a property rating report 812 including the property attractiveness rating score 810 with the corresponding property information. A property rating report 812 may be present to the end user 802 on the geographical map-based interactive user interface. The PAR system 101 may receive additional user inputs 820 such as additional observations and/or attributes from a user 818. The PAR system 101 may generate and update a property rating report 812 based on the additional inputs 820 received from a user 818.

In some embodiment, the PAR data layer 220 may search the database 110 for the property address 808 entered by the end user 802. Meanwhile, the PAR system 101 may receive additional inputs 822 from a user 818, such as live appraisal, E-signatures, report/contract, notifications, other additional observations and attributes, etc. The PAR system 101 may process the searched property data and additional inputs 822 from the user 818 to derive the property attractiveness rating scores 814 which may change based on the user inputs 822. The PAR data layer 220 may generate multiple property attractiveness rating scores 816 based on score templates. Further, the PAR system 101 may generate and update a property rating report 812 based on the property attractiveness rating scores 814 and the additional inputs 822 from a user 818. The system evaluation module 430 of the PAR data layer 220 may update the property rating report 812 in the database 110. The advanced visualization layer 230 may present the property rating report 812 to the end user 802 on the geographical map-based interactive user interface.

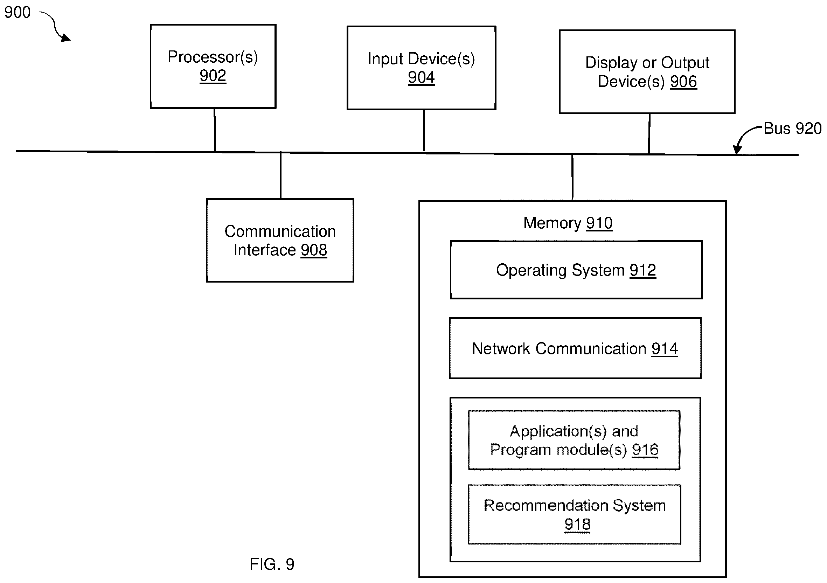

FIG. 9 is a block diagram of an example computing device in accordance with some embodiments of the present disclosure. FIG. 9 is a block diagram of an example computing device 900 that may be utilized to execute embodiments to implement processes including various features and functional operations as described herein. For example, the computing device 900 may function as an application server 102, computing devices 130 or a portion or combination thereof in some embodiments. The computing device 900 may be implemented on any electronic device to execute software applications derived from program instructions for the PAR system 101. The computing device 900 may include but is not limited to personal computers, servers, smart phones, media players, electronic tablets, game consoles, mobile devices, email devices, etc. In some implementations, the computing device 900 may include one or more processors 902, one or more input devices 904, one or more display or output devices 906, one or more communication interfaces 908, and memory 910. Each of these components may be coupled by bus 918, or in the case of distributed computer systems, one or more of these components may be located remotely and accessed via a network.

Processor(s) 902 may use any known processor technology, including but not limited to graphics processors and multi-core processors. Suitable processors for the execution of a program of instructions may include, by way of example, both general and special purpose microprocessors, and the sole processor or one of multiple processors or cores, of any kind of computer. Generally, a processor may receive instructions and data from a read-only memory or a random access memory or both. The essential elements of a computer may include a processor for executing instructions and one or more memories for storing instructions and data. Generally, a computer may also include, or be operatively coupled to communicate with, one or more non-transitory computer-readable storage devices for storing data files; such devices include magnetic disks, such as internal hard disks and removable disks; magneto-optical disks; and optical disks. Storage devices suitable for tangibly embodying computer program instructions and data may include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

Input device 904 may be any known input device technology, including but not limited to a pen input, keyboard (including a virtual keyboard), mouse, track ball, and touch-sensitive pad or display. To provide for interaction with a user, the features and functional operations described in the disclosed embodiments may be implemented on a computer having a display device 906 such as a CRT (cathode ray tube) or LCD (liquid crystal display) monitor for displaying information to the user and a keyboard and a pointing device such as a mouse or a trackball by which the user can provide input to the computer. Display device 906 may be any known display technology, including but not limited to display devices using Liquid Crystal Display (LCD) or Light Emitting Diode (LED) technology.

Communication interfaces 908 may be configured to enable the computing device 900 to communicate with other computing or network device across a network, such as via a wired connection, a wireless connection, or a combination of wired and wireless connections. For example, communication interfaces 908 may include an Ethernet interface, an optical interface, a coaxial interface, an infrared interface, a radio frequency (RF) interface, a universal serial bus (USB) interface, a Wi-Fi interface, a cellular network interface, or the like.

Memory 910 may be any computer-readable medium that participates in providing computer program instructions and data to processor(s) 902 for execution, including without limitation, non-volatile storage media (e.g., optical disks, magnetic disks, flash drives, etc.), or volatile storage media (e.g., SDRAM, ROM, etc.). Memory 910 may include various non-transitory computer-readable instructions for implementing an operating system 912 (e.g., Mac OS®, Windows®, Linux), network communication 914, and Application(s) and program modules 916, etc. One program module 916 may be the Property Attractiveness Rating (PAR) application/system 101 shown in FIGs. 1A and 1B. The operating system may be multi-user, multiprocessing, multitasking, multithreading, real-time, and the like. The operating system may perform basic tasks, including but not limited to: recognizing input from input device 904; sending output to display device 906; keeping track of files and directories on memory 910; controlling peripheral devices (e.g., disk drives, printers, etc.) which can be controlled directly or through an I/O controller; and managing traffic onbus 918. Bus 918 may be any known internal or external bus technology, including but not limited to ISA, EISA, PCI, PCI Express, NuBus, USB, Serial ATA or Fire Wire.

Network communications 914 may include instructions executed to establish and maintain network connections (e.g., software applications for implementing communication protocols, such as TCP/IP, HTTP, Ethernet, telephony, etc.).

Application(s) and program modules 916 may include software application(s) and different functional program modules which are executed by processor(s) 902 to implement the processes described herein and/or other processes. The program modules may include but are not limited to software programs, objects, components, learning models, and data structures that are configured to perform particular tasks or implement particular data types. The processes described herein may also be implemented in operating system 912.

Communication between various network and computing devices may be facilitated by one or more application programming interfaces (APIs). The API may be implemented as one or more calls in program code that send or receive one or more parameters through a parameter list or other structure based on a call convention defined in an API specification document. A parameter may be a constant, a key, a data structure, an object, an object class, a variable, a data type, a pointer, an array, a list, or another call.

The features and functional operations described in the disclosed embodiments may be implemented in one or more computer programs that may be executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program may be written in any form of programming language (e.g., Objective-C, Java), including compiled or interpreted languages, and it may be deployed in any form, including as a stand-alone program or as a module, component, subroutine, or other unit suitable for use in a computing environment.

The described features and functional operations described in the disclosed embodiments may be implemented in a computer system that includes a back-end component, such as a data server, or that includes a middleware component, such as an application server or an Internet server, or that includes a front-end component, such as a user computer having a graphical user interface or an Internet browser, or any combination thereof. The components of the system may be connected by any form or medium of digital data communication such as a communication network. Examples of communication networks include, e.g., a telephone network, a LAN, a WAN, and the computers and networks forming the Internet.

The computer system may include user computing devices and application servers. A user or client computing device and server may generally be remote from each other and may typically interact through a network. The relationship of client computing devices and server may arise by virtue of computer programs running on the respective computers and having a client-server relationship to each other.

While various embodiments have been described above, it should be understood that they have been presented by way of example and not limitation. It will be apparent to persons skilled in the relevant art(s) that various changes in form and detail can be made therein without departing from the spirit and scope. In fact, after reading the above description, it will be apparent to one skilled in the relevant art(s) how to implement alternative embodiments. For example, other steps may be provided, or steps may be eliminated, from the described flows, and other components may be added to, or removed from, the described systems. Accordingly, other implementations are within the scope of the following claims.

In addition, it should be understood that any figures which highlight the functionality and advantages are presented for example purposes only. The disclosed methodology and system are each sufficiently flexible and configurable such that they may be utilized in ways other than that shown.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. Features of the systems described may be incorporated into/used in corresponding methods and vice versa.

For the sake of completeness, it is also stated that the term "comprising" does not exclude other elements or steps, the term "a" or "an" does not exclude a plurality, a single processor or other unit [feature] may fulfil the functions of several means recited in the claims and any reference signs in the claims shall not be construed as limiting the scope of the claims.

**Claims**

1. A method implemented by a computing system, the computing system comprising one or more processors and one or more non-transitory computer-readable storage devices having computer-executable instructions, the computing system comprising a Property Attractiveness Rating (PAR) application being stored as the computer-executable instructions which, when executed by the one or more processors, causes the computing system to perform operations comprising:

    storing, in a database, data associated with a plurality of properties, the data of each property comprising a plurality of property attributes;
    presenting a geographical map-based interactive user interface on a display of a user computing device for a user to search for at least one property on a map over a network;

receiving, via the geographical map-based user interface, a user input with one or more property attributes;
responsively to the user input, searching the database to obtain and present one or more properties of interest on the map;
receiving, via the geographical map-based user interface, a user selection of a searched property of interest on the map;
generating a PAR for the selected property of interest; and
presenting, on the geographical map-based user interface, the generated PAR of the selected property of interest with respective property information on the map.

2. The method of claim 1, wherein receiving a user selection of a searched property of interest on the map comprises:

zooming the one or more searched properties of interest down to an area or a grid on the map; and
navigating to the one or more searched properties of interest on the map.

3. The method of claim 1 or claim 2, further comprising executing the PAR application by the one or more processors to perform:

receiving, via a data ingestion process over a network, data associated with a plurality of properties into the database;
processing, via a data processing process, the data to create a training dataset and a test dataset;
training, via a learning process with the training dataset and the test dataset, a plurality of models of a learning system in the PAR system;
generating, via an evaluating process, a final model from the trained models; and
applying, via the evaluating process, the final model to the selected property of interest to generate the PAR of the selected property of interest.

4. The method of claim 3, wherein the computing system is caused to perform:

by executing the PAR application by the one or more processors,
receiving, via a data ingestion process through the geographical map-based user interface, new data associated with one or more properties not stored in the database; and
dynamically updating the data with the new data in the database.

5. The method of claim 4, wherein the computing system is caused to perform:

generating the final model based on the updated data; and
updating, via the evaluating process, the generated PAR of the selected property of interest in the database.

6. The method of claim 4 or claim 5, wherein the computing system is caused to perform:

by executing the learning process by the one or more processors,
applying, multiple regression models to determine a combination of attributes of a property which are well-suited to derive a PAR score for a property; and
selecting, a Multiple Linear Regression model that involves a linear combination of variables that are linearly independent and normally distributed;
or applying, a Polynomial Regression model that involves a non-linear combination of variables that are linearly independent and normally distributed;
or applying, a Weighted Regression model that involves a linear or non-linear combination of variables that are linearly independent and normally distributed with weights assigned to each variable as determined to be necessary.

7. The method of claim 1 or of any of claims 2 to 6, wherein the respective property information comprises one or more of:

property address including zip code;
property images;
spatial data comprising latitude and longitude;
comparable properties for the property being analyzed;
urban data such as foot traffic and accessibility;

inputs from appraisers and other real estate experts; and
inputs from end users.

8. The method of claim 3 or of any of claims 4 to 7, wherein the received data associated with the plurality of properties comprises:

data gathered from one or more third-party proprietary data stores;
data, via the geographical map-based user interface entered by appraisal experts;
data gathered from a plurality of users; and
data gathered from other internal and external reports including comparable data.

9. The method of claim 1 or of any of claims 2 to 8, wherein the PAR system is executed by the processor to receive the data from the database and other data resources over the network through an application programming interface (API).

10. A computing system comprising:

one or more processors; and
one or more non-transitory computer-readable storage devices storing computer-executable instructions, the computing system executing a Property Attractiveness Rating (PAR) system being stored as the computer-executable instructions which, when executed by the one or more processors, causes the computing system to perform operations comprising:

storing, in a database, data associated with a plurality of properties, the data of each property comprising a plurality of property attributes;
presenting a geographical map-based interactive user interface on a display of a user computing device for a user to search for at least one property on a map over a network;
receiving, via the geographical map-based user interface, a user input with one or more property attributes;
responsively to the user input, searching the database to obtain and present one or more properties of interest on the map;
receiving, via the geographical map-based user interface, a user selection of a searched property of interest on the map;
generating a PAR for the selected property of interest; and
presenting, on the geographical map-based user interface, the generated PAR of the selected property of interest with respective property information on the map.

11. The system of claim 10, wherein receiving a user selection of a searched property of interest on the map further comprises:

zooming the one or more searched properties of interest down to an area or a grid on the map; and
navigating to the one or more searched properties of interest on the map.

12. The system of claim 10 or claim 11, wherein the computing system is caused to perform:

by executing the PAR application by the one or more processors,
receiving, via a data ingestion process over a network, data associated with a plurality of properties into the database;
processing, via a data processing process, the data to create a training dataset and a test dataset;
training, via a learning process with the training dataset and the test dataset, a plurality of models of a learning system in the PAR system;
generating, via an evaluating process, a final model from the trained models; and
applying, via the evaluating process, the final model to the selected property of interest to generate the PAR of the selected property of interest.

13. The system of claim 12, wherein the computing system is caused to perform:

by executing the data processing process by the one or more processors,
receiving, via a data ingestion process through the geographical map-based user interface, new data associated with one or more properties not stored in the database; and
dynamically updating the data with the new data in the database.

14. The system of claim 13, wherein the computing system is caused to perform:

by executing the evaluating process by the one or more processors,
generating the final model based on the updated data; and
updating, via the evaluating process, the generated PAR of the selected property of interest in the database.

15. The system of claim 13 or claim 14, wherein the computing system is caused to perform:

by executing the learning process by the one or more processors,
applying, multiple regression models to determine a combination of attributes of a property which are well-suited to derive a PAR score for a property; and
selecting, a Multiple Linear Regression model that involves a linear combination of variables that are linearly independent and normally distributed;
or applying, a Polynomial Regression model that involves a non-linear combination of variables that are linearly independent and normally distributed;
or applying, a Weighted Regression model that involves a linear or non-linear combination of variables that are linearly independent and normally distributed with weights assigned to each variable as determined to be necessary.

**100A**

### Application Server 102

Processor(s) 111

#### Memory 112

##### PAR System 101

Program Modules
200

Data Aggregation
Module 120

Proprietary
Data Store 110

Property Data
114

**Network 150**

### User Computing Device 130[1]

Processor 131

User Interface 132

#### Memory 133

Browser
Application
134

### User Computing Device 130[2]

Processor 131

User Interface 132

#### Memory 133

Mobile
Application
135

FIG. 1A

100B

Data Aggregation
Module 120

Proprietary
Data Store
110

Property Attractiveness
Rating (PAR) system
101

Network 150

User Computing Device 130[1]
(Web Browser Application 134)

User Computing Device 130[2]
(Mobile Application 135)

FIG. 1B

200

Property Attractiveness Rating (PAR)
System 101

Advanced Visualization
Layer 230

PAR Data Layer
220

Base Map Layer
210

FIG. 2

300

Advanced Visualization Layer
230

PAR Details Module
320

Property Details Module
310

FIG. 3

400

PAR Data Layer
220

System Evaluation
Module 430

Learning System
Module 420

Data Processing
Module 410

Proprietary
Data Store
110

Data
Aggregation
Module 120

FIG. 4

500

Store data associated with a plurality of properties in a database — 502

↓

Present a geographical map-based interactive user interface on a display of a user computing device — 504

↓

Receive, via the geographical map-based user interface, a user input with one or more property attributes — 506

↓

Responsively to the user input, search the database to obtain and present one or more properties of interest on the map — 508

↓

Receive, via the geographical map-based user interface, a user selection of a searched property of interest — 510

↓

Generate a PAR for the selected property of interest — 512

↓

Present, on the geographical map-based user interface, the generated PAR of the selected property of interest — 514

FIG. 5

608 View Property Attractiveness Score (PAR) generated via a proprietary algorithm using relevant attributes

606 Navigate to points of interest

604 Narrow down to area / grid

602 Zip code based search

FIG. 6

REGRESSION STACK 702

Generalized Linear Models

Penalized Regression Models

Boosted Decision Trees

Quantile Regression

Non-linear Regression Models

Stacked Regression

Bayesian Regression

DIAGNOSTICS 704

Assumptions Checks

Outlier Tests

Correlation and Variance Checks

K-fold Cross-validation

DIAGNOSTICS 706

Mean Absolute and Squared Errors

Root Mean Squared Error

R-Squared

Prediction Intervals

PAR Score 708

FIG. 7

FIG. 8

FIG. 9

EP 3 965 050 A1

| | Europäisches Patentamt European Patent Office Office européen des brevets | **EUROPEAN SEARCH REPORT** | **Application Number** **EP 21 17 1004** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/096362 A1 (KWAN AMY ASHLEY [US]) 5 April 2018 (2018-04-05) * paragraph [0004] * * paragraph [0033] – paragraph [0038] * * paragraph [0044] * * paragraph [0048] – paragraph [0072] * ----- | 1-15 | INV. G06Q50/16 G06Q30/02 G06Q30/06 |
| X | US 2019/114727 A1 (SPATH TONY [US]) 18 April 2019 (2019-04-18) * paragraph [0004] – paragraph [0010] * * paragraph [0020] * * paragraph [0045] – paragraph [0052] * * paragraph [0058] – paragraph [0059] * * paragraph [0066] – paragraph [0068] * ----- | 1-15 | |
| X | US 2014/200962 A1 (GODSHALK EDDIE [US]) 17 July 2014 (2014-07-17) * paragraph [0007] – paragraph [0008] * * paragraph [0015] * * paragraph [0017] – paragraph [0018] * * paragraph [0060] – paragraph [0061] * ----- | 1-15 | |

**TECHNICAL FIELDS SEARCHED (IPC)**

G06Q

The present search report has been drawn up for all claims

| Place of search | Date of completion of the search | Examiner |
|---|---|---|
| The Hague | 13 October 2021 | Marcu, Antoniu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 17 1004

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2021

| Patent document cited in search report | Publication date | Patent family member(s) | Publication date |
|---|---|---|---|
| US 2018096362 A1 | 05-04-2018 | NONE | |
| US 2019114727 A1 | 18-04-2019 | NONE | |
| US 2014200962 A1 | 17-07-2014 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 16944982 B